# FASCICULE DE BREVET EUROPEEN

(11) **EP 0 645 654 B1**
(45) Date de publication et mention de la délivrance du brevet: **12.12.2001**
(21) Numéro de dépôt: 94402108.8
(22) Date de dépôt: 22.09.1994
(51) Int. Cl.: G02B 6/42

(54) **Procédés de réalisation d'une structure intégrée monolithique incorporant des composants opto-électroniques et structures ainsi réalisées**
Verfahren zum Herstellen einer monolitisch integrierten Struktur mit optoelektronischen Komponenten und so hergestellte Strukturen
Methods of producing a monolitic integrated structure incorporating opto-electronical components and structures so produced

(30) Priorité: 24.09.1993 FR 9311404
(43) Date de publication de la demande: 29.03.1995
(60) Demande divisionnaire: 99117639.7
(73) Titulaire: FRANCE TELECOM, 75015 Paris (FR)
(72) Inventeur: Ghirardi, Frédéric, F-75011 Paris (FR); Giraudet, Louis, F-92600 Asnieres (FR)
(74) Mandataire: Martin, Jean-Jacques

(56) Documents cités:
- EP-A- 0 422 854
- DE-A- 4 115 078
- US-A- 5 122 852
- ELECTRONICS LETTERS., vol.24, no.23, 10 Novembre 1988, STEVENAGE GB pages 1457 - 1458 S. CHANDRASEKHAR ET AL. 'BALANCED DUAL PHOTODIODES INTEGRATED WITH A 3dB DIRECTIONAL COUPLER FOR COHERENT LIGHTWAVE RECEIVERS'
- PATENT ABSTRACTS OF JAPAN vol. 16, no. 130 (E-1184) 24 Décembre 1991 & JP-A-03 292 777 (NEC)
- PATENT ABSTRACTS OF JAPAN vol. 15, no. 14 (E-1022) 29 Octobre 1990 & JP-A-02 264 492 (MITSUBISHI ELECTRIC)
- PATENT ABSTRACTS OF JAPAN vol. 11, no. 288 (E-542) 23 Avril 1987 & JP-A-62 089 388 (MATSUSHITA ELECTRIC)
- Electronics Letters, Vol.28, No.12, Juin 1992, pages 1140-1142

## Description

La présente invention concerne le domaine de l'opto-électronique, et plus particulièrement celui des structures intégrées monolithiques faisant appel à une technologie commune de réalisation de composants et non à un assemblage de composants réalisés séparément. L'invention s'applique notamment mais non exclusivement à la réalisation d'un circuit de réception hétérodyne.

La publication "Integrated balanced mixer receiver on InP, Trommer et al., 4th InP and Related Compounds Conference, WE3, Newport 1992" décrit un circuit de réception hétérodyne intégré monolithique comprenant deux photodiodes de détection reliées électriquement en série et un coupleur 3dB comportant deux guides optiques. Le coupleur reçoit respectivement en entrée dans les guides optiques un signal utile à démoduler S et un signal de référence R généré par un oscillateur local et délivre en sortie sur les deux photodiodes de détection deux signaux correspondant respectivement à la demi-somme et à la demi-différence des signaux S et R. Les photodiodes délivrent des signaux électriques représentatifs du carré du module de cette demi-somme et de cette demi-différence, de la forme S² + 2S.R + R² et S² - 2S.R + R² respectivement. Le montage en série des deux photodiodes permet de recueillir au point commun la différence de ces deux expressions, c'est-à-dire un signal électrique de la forme 4S.R. On comprendra aisément que l'intérêt d'un tel récepteur réside dans l'élimination du bruit R² de l'oscillateur local ainsi que dans l'amplification du signal utile S, l'amplitude du signal R étant très grande devant celle du signal S. Toutefois, il est difficile de réaliser dans la pratique un coupleur complètement équilibré, c'est-à-dire apte à délivrer exactement la demi-somme et la demi-différence des signaux d'entrée S et R, de sorte qu'il est nécessaire de réaliser un grand nombre de structures intégrées et d'effectuer un tri pour éliminer celles dont le coupleur n'est pas bien équilibré. Dans la structure décrite, les deux guides optiques sont réalisés sur un substrat semi-isolant avec des matériaux semi-isolants de sorte que l'on ne rencontre pas de problèmes d'isolation électrique des deux photodiodes.

A titre d'exemple d'une autre structure monolithique intégrée connue, on citera la publication "Directional Coupler, Balanced PIN Pair and JFET intregrated on InP Towards Receiver OEICs, L Giraudet et al., Proceeding of fourth optoelectronic conference, PDP, 14 July 1992". Dans cette structure les deux guides optiques du coupleur sont réalisés dans des matériaux conducteurs et l'on observe un courant de fuite circulant par les guides optiques entre les électrodes des deux photodiodes montées en série, qui altère les performances de la structure. Le fait de réaliser les deux guides optiques du coupleur dans des matériaux conducteurs présente néanmoins l'avantage de permettre un équilibrage électrique de ce dernier au moyen de l'application d'une tension électrique ou d'une injection de courant électrique par deux électrodes de contact réalisées sur le coupleur, associées chacune à un guide optique. Cette injection de courant ou tension appliquée entraîne une variation de l'indice du matériau constituant la couche de guidage des guides optiques et rend ainsi possible l'ajustement de la phase des signaux lumineux se propageant dans ce dernier.

On a par ailleurs proposé dans la publication "Balanced Operation of a GalnAs/GaInAsP Multiple-Quantum-Well Integrated Heterodyne Receiver, IEEE Photonics Technology Letters Vol.2, No 8., August 1990" de ne pas relier sur la structure même les deux photodiodes en série afin de s'affranchir des problèmes de courant de fuite entre les électrodes des deux photodiodes. Les signaux électriques délivrés par chacune des deux photodiodes sont amplifiés séparément puis soustraits l'un de l'autre pour éliminer les termes en S² et R² précités. L'amplification séparée des signaux électriques délivrés par chacune des photodiodes présente l'inconvénient de ne plus supprimer le bruit dû à la variation de R².

On a décrit dans le brevet US-A-5 122 852 une structure intégrée comportant deux détecteurs à semi-conducteurs disposés sur un même substrat, et associés chacun à un guide optique. Le substrat et les guides sont formés dans des matériaux isolants non semi-conducteurs qui, s'ils ne posent pas de problèmes d'isolation électrique, ne permettent pas l'intégration monolithique des détecteurs qui doivent être réalisés par une technique dite "epitaxial lift-off", complexe à mettre en oeuvre. La structure décrite, qui n'est pas une structure intégrée monolithique, est ainsi coûteuse à réaliser.

On a proposé dans la publication ELECTRONICS LETTERS, Vol. 24, N° 23, 10 Novembre 1988, STEVENAGE GB, pages 1457-1458, S. Chandrasekhar et al., "Balanced dual photodiodes integrated with a 3dB directional coupler for coherent lightwave receivers", de diminuer le courant de fuite dû à l'emploi d'un matériau conducteur pour un guide optique en réduisant la section de celui-ci et en augmentant sa longueur. La résistivité du guide reste toutefois assez faible, de l'ordre du MΩ, et en tout cas tributaire de la longueur du guide, qui pose alors un problème d'encombrement et de coût de réalisation.

On a décrit dans la publication "22 GHz Photodiode monolithically integrated with optical waveguide on semi-insulating InP using novel Butt-Joint structure, Kato et al., Electronic Letters, 1992, pp 1140-1143" un moyen pour réaliser une couche isolante sur la tranche d'extrémité d'un guide optique, entre ce dernier et une photodiode. La photodiode est isolée par usinage par faisceau d'ions réactifs (RIBE en anglais), et un film de silice constituant la couche isolante est déposé sur les flancs de la photodiode au moyen d'un magnétron. Il est difficile, par cette méthode, de contrôler l'épaisseur du film de silice amorphe qui est réalisé entre la photodiode et le guide optique, pour obtenir la valeur particulière d'épaisseur de film qui assure une transmission optimale de lumière entre le guide optique et la photodiode.

On a décrit dans la publication JP-A-03 292 777 une structure intégrée dans laquelle une barrière isolante est épitaxiée après les couches constitutives d'un laser à semi-conducteur et d'un détecteur. Ces deux composants sont réalisés sur un substrat conducteur et conservent une électrode commune, en sorte que l'isolation entre les deux composants n'est pas complète. De même, on a proposé dans la publication EP-A-0 422 854 une structure dans laquelle un photodétecteur et un amplificateur optique conservent une électrode commune.

La présente invention vise à remédier aux inconvénients précités. Les moyens ainsi proposés selon la présente invention sont définis dans les revendications annexées. La barrière isolante est réalisée dans l'invention durant l'élaboration des composants de la structure ou après l'élaboration de ceux-ci mais sans qu'il soit nécessaire de procéder à l'usinage d'une tranchée située sur le trajet de la lumière dans la portion de structure entre ces deux composants.

Avantageusement, la transmission de lumière entre l'un au moins des composants opto-électroniques et le guide optique s'effectue par évanescence. En variante, elle s'effectue par couplage en bout.

De préférence, le dopage s'effectue par diffusion profonde, depuis la surface de la structure jusqu'à un substrat isolant de la structure, à travers le guide optique, dudit élément. En variante, il s'effectue par implantation ionique, depuis la surface de la structure jusqu'à un substrat isolant de la structure, à travers le guide optique, dudit élément. De préférence, ledit élément est de conductivité de type p+. Le cas échéant, lorsque la structure comporte au moins une première et une deuxième couches superposées de conductivité de types opposés, on effectue un dopage d'une région de la première couche par un premier élément de conductivité de type opposé à celui de cette première couche et un dopage d'une région de la deuxième couche, décalée de la région de la première couche, par un deuxième élément de conductivité de type opposé à celui de la deuxième couche et du premier élément, de manière à réaliser entre les deux composants opto-électroniques deux jonctions isolantes de type npn et pnp. On peut réaliser de la même manière plusieurs jonctions isolantes mises en série pour améliorer l'isolation.

De préférence, ledit élément de dopage est de conductivité de type p+.

En variante, et lorsque l'un des composants optoélectroniques est disposé au dessus d'une portion terminale du guide optique de façon à permettre une transmission de lumière de l'un à l'autre par evanescence, la barrière isolante est réalisée par dépôt par épitaxie, entre deux couches supérieures de la structure de conductivité du type donné et au dessus de ladite portion terminale du guide optique, d'une couche intermédiaire de conductivité de type opposé qui s'étend ainsi au travers de la portion de trajet de type evanescent de la lumière.

Avantageusement, une couche d'adaptation d'impédance optique de conductivité de type n+ est déposée entre le guide optique et celui au moins des composants opto-électroniques pour lequel la transmission de lumière s'effectue par évanescence avec le guide optique.

Le procédé selon l'invention est avantageusement utilisé pour réaliser une structure intégrée monolithique d'un circuit de réception hétérodyne comprenant deux photodiodes de détection reliées électriquement en série et un coupleur 3dB apte à être équilibré électriquement, le coupleur constituant l'un desdits composants opto-électroniques et chaque photodiode constituant l'autre desdits composants opto-électroniques.

D'autres caractéristiques et avantages de la présente invention apparaîtront à la lecture de la description détaillée qui va suivre, d' exemples de réalisation non limitatifs de l'invention et à l'examen du dessin annexé sur lequel :
- la figure 1 est une vue en perspective, schématique, d'une structure intégrée monolithique conforme à une réalisation de l'invention, et
- la figure 2 est une juxtaposition de sections, dans des plans parallèles au plan XZ, de la structure représentée sur la figure 1.

Dans toute la description qui suit les termes ou ensemble de termes "longueur, avant, arrière", "latéral" et "épaisseur, vertical, supérieur, inférieur" se réfèreront respectivement à des distances ou positionnements selon les axes X, Y et Z d'un trièdre de référence (X, Y, Z) pour les figures.

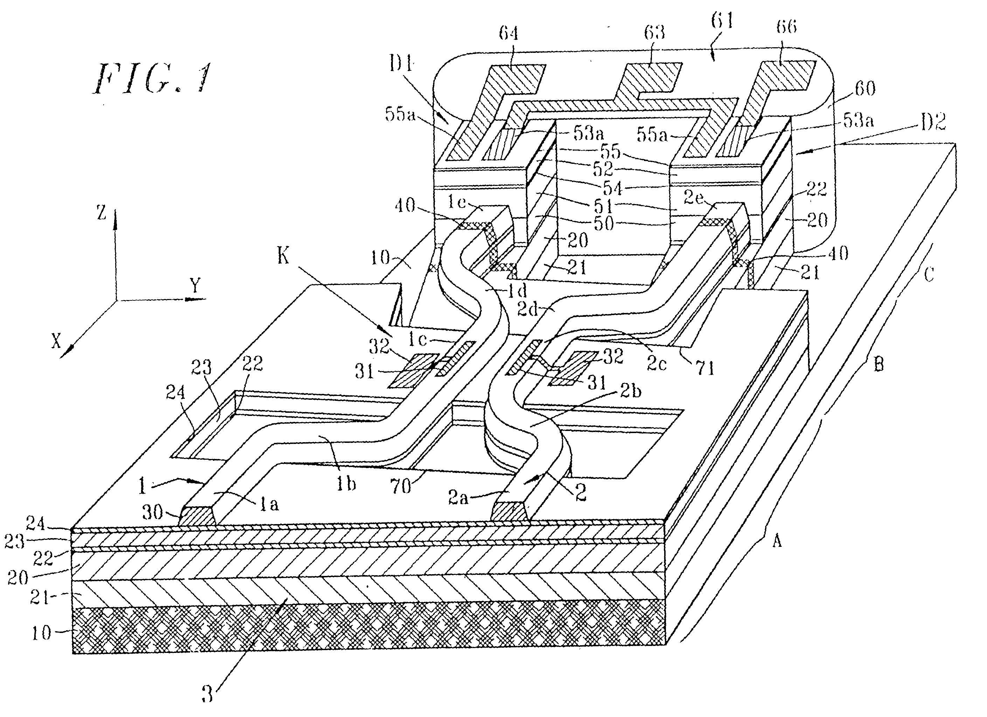

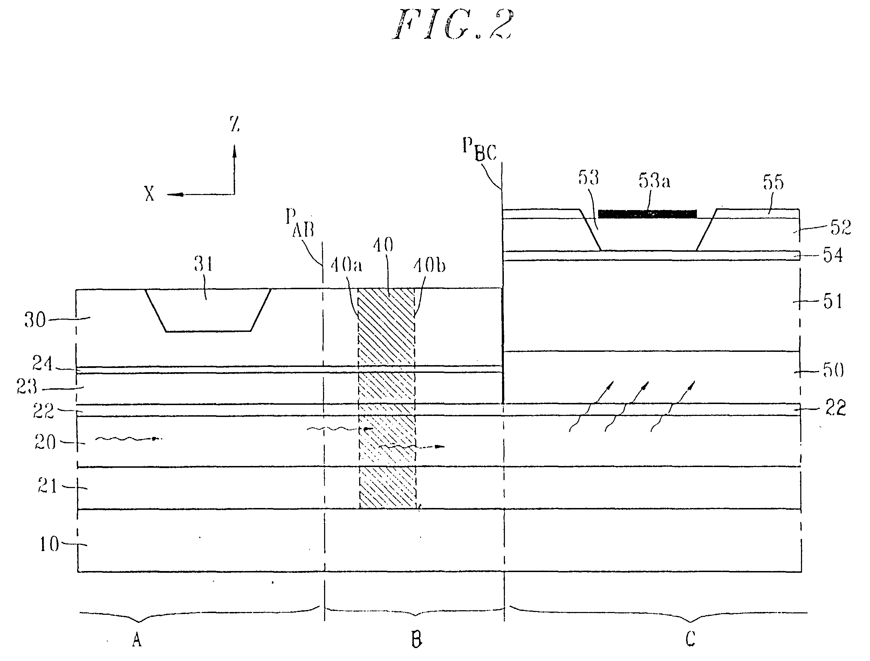

L'exemple de structure intégrée monolithique représenté sur les figures 1 et 2 est réalisé conformément au procédé selon l'invention et concerne un circuit de réception hétérodyne comprenant deux photodiodes de détection D1 et D2, de type PIN, reliées électriquement en série et un coupleur 3dB électriquement ajustable, référencé K, comportant deux guides optiques présentant à leur partie supérieure des rubans de guidage référencés 1 et 2 pour chaque guide optique respectivement.

Cette structure intégrée est généralement symétrique par rapport à un plan médian de symétrie parallèle au plan XZ.

L'introduction de la lumière dans les guides optiques s'effectue par la face frontale avant 3 de la structure, plane et perpendiculaire à l'axe X, dans une couche de guidage 20 bordée inférieurement et supérieurement par des couches de confinement inférieur 21 et supérieur 22 comme cela sera précisé dans la suite. Les rubans de guidage 1 et 2 confinent la lumière dans la région de la couche de guidage 20 qu'ils surmontent et présentent depuis la face frontale avant 3 deux portions avant rectilignes s'étendant de façon espacée parallèlement à l'axe X, référencées 1a et 2a, prolongées vers l'arrière par deux portions infléchies avant 1b et 2b se rapprochant l'une de l'autre, puis par deux portions rectilignes rapprochées 1c et 2c, s'étendant côte-à-côte parallèlement à l'axe X et constituant la zone active du coupleur K, par deux portions infléchies arrière s'éloignant l'une de l'autre 1d et 2d, prolongées par deux portions rectilignes 1e et 2e, s'étendant de façon espacée parallèlement à l'axe X et aboutissant respectivement aux photodiodes D1 et D2.

On désignera par la suite par A, B et C trois régions de la structure délimitées entre elles par deux plans P_{AB} et P_{BC} perpendiculaires à l'axe X.

Les rubans de guidage 1 et 2 s'étendent sur les régions A et B et les photodiodes D1 et D2 sont réalisées dans la région C. Le plan P_{AB} coupe les rubans de guidage 1 et 2 au niveau de la jonction entre les portions infléchies arrière 1d et 2d et les portions rectilignes arrière 1e et 2e.

La structure intégrée monolithique représentée sur les figures 1 et 2 comporte un substrat 10 en matériau semi-isolant, représenté après découpage sur les figures, sous une forme parallélipipédique allongée selon l'axe X, constitué dans l'exemple de réalisation décrit par du phosphure d'indium rendu semi-isolant par incorporation de fer (InP), et dont la résistance est supérieure à 10⁷ Ωcm.

Sur l'ensemble du substrat semi-isolant 10 on dépose successivement dans une première épitaxie, par exemple par une méthode d'épitaxie par organométalliques en phase vapeur (MOCVD en anglais) ou par une méthode d'épitaxie par jet moléculaire (MBE en anglais) :
a) la couche de confinement inférieur 21 d'indice n₁, constituée d'InP, d'une épaisseur de 0,5 µm, de conductivité de type n,
b) la couche de guidage optique 20 d'indice n₂ supérieur à n1, constituée de quaternaire InGaAsP, de type de conductivité n ou n⁻ et d'une épaisseur de 0,65 µm,
c) la couche de confinement supérieur 22 d'indice n₃ inférieur à n₂, d'une épaisseur de l'ordre de 0,05 µm, constituée d'InP de conductivité de type n-,
d) une couche 50 d'adaptation d'impédance optique, constituée de matériau quaternaire GaInAsP de conductivité de type n+, d'une épaisseur de 0,4 µm,
e) une couche absorbante 51 de la photodiode PIN, constituée de matériau ternaire GaInAs de conductivité intrinsèque de type n⁻, d'une épaisseur de 0,9 µm,
f) une fine couche 54 de matériau quaternaire GaInAsP, destinée à réaliser de façon connue en soi un raccord graduel avec la couche suivante de matériau binaire, d'une épaisseur de 50 nm,
g) une couche 52 de confinement supérieur de la photodiode PIN, constituée d'InP de type de conductivité n, d'une épaisseur de 0,4 µm,
h) une fine couche 55 de contact de la photodiode, constituée de matériau ternaire GaInAs de type de conductivité n, d'une épaisseur de l'ordre de 0,05 µm, et
i) une couche de protection d'InP de l'ordre de 0,1 µm pour la reprise ultérieure de l'épitaxie et qui n'apparaît pas sur le dessin.

Ensuite, sur la partie de la structure (régions A et B) sur laquelle seront réalisés les deux guides optiques du coupleur K, on enlève la couche de protection d'InP, précitée, les couches 55, 52, 54, 51 et 50. On procède alors, sur la fine couche de confinement supérieur 22, mise à nu, à une deuxième épitaxie au cours de laquelle on dépose successivement sur les régions A et B de la structure :
j) une couche 23 de confinement supérieur, constituée d'InP, de 0,15 µm d'épaisseur, de même composition que la couche 22,
k) une fine couche 24 d'arrêt, constituée de matériau quaternaire GaInAsP, de conductivité de type n, d'épaisseur 25 nm,
l) une couche 30 de confinement supérieur constituée d'InP, de conductivité de type n, d'épaisseur 0,8 µm et sur laquelle seront gravés les rubans de guidage 1 et 2.

On dépose alors sur l'ensemble de la structure un masque de protection en nitrure de silicium, puis on effectue une gravure sèche de ce masque correspondant au tracé des rubans de guidage 1 et 2, qui sont ensuite réalisés par enlèvement de la couche de confinement supérieur 30 sur les parties non protégées.

Après gravure des rubans des guidages 1 et 2, on dispose un deuxième masque de protection, en résine, sur l'ensemble de la structure, ce masque présentant deux fenêtres 70 et 71 englobant les portions infléchies 1b, 2b et 1d, 2d des rubans de guidage 1 et 2. On enlève à l'intérieur de ces fenêtres par attaque chimique les couches d'arrêt 24 et de confinement supérieur 22 et 23 pour mettre à nu dans ces fenêtres la face supérieure de la couche de guidage 20 comme représenté sur la figure 1.

On dépose ensuite sur l'ensemble de la structure un nouveau masque de protection en nitrure de silicium sur lequel on réalise une fenêtre se présentant sous la forme d'une fente s'étendant sur toute la largeur de la structure, selon un plan parallèle au plan YZ et qui va servir à la réalisation d'une barrière électriquement isolante 40, conformément à l'invention, par diffusion profonde au travers de cette fenêtre jusqu'au substrat semi-isolant 10, d'un élément de conductivité de type p+, avantageusement du zinc, destiné à créer une double jonction npn dans le sens de l'axe X, apte à isoler électriquement les deux photodiodes de détection D1 et D2 au coupleur K tout en permettant une transmission de lumière entre ces derniers. A titre indicatif, à 500°C, il faut une demi-heure environ pour diffuser à travers les épaisseurs de 1 µm environ d'InP des couches de confinement supérieur 22, 23, 24 et 30, de 0,65 µm de couche de guidage 20 en matériau quaternaire et de 0,5 µm d'InP de couche de confinement inférieur 21. Le dopage p+ est localisé dans les guides optiques entre deux plans 40a et 40b parallèles entre eux et perpendiculaires à l'axe X, ces deux plans 40a et 40b étant situés dans la région B de conductivité de type n ou n- de la structure. La double jonction ainsi créée in situ équivaut au montage de deux diodes tête-bêche, et s'oppose à la traversée du courant électrique tout en permettant un passage de la lumière dans le guide optique.

Dans une variante de la mise en oeuvre du procédé selon l'invention, on peut proposer de former deux barrières isolantes présentant depuis la surface de la structure, selon la direction de l'axe Z, la forme de caissons de section transversale rectangulaire, s'étendant vers le bas jusqu'au substrat et à l'intérieur desquels se situent respectivement les deux photodiodes.

Dans le cas où toutes les couchés formant le guide optique n'auraient pas une conductivité de même type, ou dans le cas où d'autres couches de conductivité de type opposé à celui du guide optique seraient déposées sur dernier, on réaliserait l'isolement électrique par deux dopages profonds s'étendant selon deux plans parallèles au plan YZ et décalés selon l'axe X. Les dopages seraient effectués avec deux éléments de conductivité de types opposés, pour constituer sur chaque couche de conductivité d'un type donné deux jonctions de diode montées tête-bêche npn et pnp.

La barrière électriquement isolante 40 se situe dans l'exemple décrit sur le trajet de la lumière dans le guide optique.

On notera qu'il est également possible, sans sortir du cadre de l'invention, de réaliser la barrière électriquement isolante in situ lors de l'épitaxie en déposant après l'étape b) et avant l'étape c) sur la couche de guidage 20 de conductivité de type n ou n-, une couche de conductivité de type p+, puis en déposant sur cette dernière la couche de confinement supérieur 22 de conductivité de type n ou n-. Dans ce cas, la barrière électriquement isolante, qui est également constituée par une jonction npn, se situe sur le trajet, de type évanescent, de la lumière sortant du guide optique vers la photodiode.

On crée, après réalisation de la barrière isolante 40 par diffusion profonde de zinc, sur le même masque en nitrure de silicium au travers duquel s'est fait cette diffusion, quatre nouvelles fenêtres dont deux se situent respectivement sur les portions rectilignes rapprochées 1c, 2c des rubans de guidage 1 et 2 et les deux autres sur les couches de contact 55 des photodiodes D1 et D2. On diffuse au travers de ces fenêtres du zinc dans les couches 55 et 52 des photodiodes pour la réalisation de deux zones 53 de type de conductivité p+ et on diffuse dans la couche 30 sur la moitié de l'épaisseur des rubans de guidage 1 et 2 du zinc pour la réalisation de deux zones 31 de conductivité de type p+ d'électrodes d'équilibrage du coupleur K.

On notera qu'il est avantageux que les couches 30 et 52 soient, comme cela vient d'être décrit, réalisées dans le même matériau de façon à permettre le dopage simultané par diffusion de Zn dans ces couches.

On dépose ensuite sur la couche d'arrêt 24, latéralement de part et d'autre des deux portions rectilignes rapprochées 1c et 2c des rubans de guidage 1 et 2, deux contacts électriques 32 respectifs du coupleur K, reliés électriquement chacun à la zone diffusée 31 adjacente.

On dépose également par métallisation sur chaque photodiode D1 et D2 des contacts n et p référencés respectivement 55a et 53a, reliés électriquement respectivement, pour chaque photodiode, à une partie de la surface de la couche de contact 55 située hors de la zone diffusée 53 et à cette dernière.

Avantageusement, la couche 50 d'adaptation d'impédance optique en matériau quaternaire présente un indice n4 supérieur à l'indice n3 de la couche de confinement supérieur 22. L'épaisseur de la couche 50 est de préférence choisie pour qu'elle constitue une couche antireflet et sa situation au-dessus du guide optique permet de limiter le temps de transit des porteurs. La couche 50 présente avantageusement un indice optique supérieur à celui de la couche de guidage de façon à réduire la longueur d'absorption nécessaire à la transmission de la lumière par évanescence sortant du guide optique vers la photodiode, et donc de limiter la capacité de la photodiode.

On détoure ensuite sur les régions B et C de la stucture, jusqu'au substrat 10, les deux photodiodes D1 et D2 par gravure par faisceau ionique (IBE en anglais) au travers d'un masque de résine, pour aboutir à la configuration représentée sur la figure 1. La région de détourage s'étend depuis le plan P_{AB} de la structure vers l'arrière jusqu'à la face frontale arrière de la structure. Les guides optiques sont détourés sur leur partie surmontée par les portions rectilignes arrière 1e et 2e des rubans de guidage 1 et 2, et les parties détourées des guides optiques s'étendent de part et d'autre suivant l'axe X, de la barrière isolante 40, de sorte qu'il n'y a pas de contact électrique possible entre les parties des guides optiques s'étendant en avant de la barrière isolante 40 et les photodiodes.

On réalise ensuite de façon connue en soi un plot de support 60 de contacts électriques, en polyimide, dont la face supérieure porte la référence 61 et l'on dépose par métallisation sur ce plot de support 60 des contacts 66, 63 et 64 reliés respectivement au contact n 55a de la photodiode D1, au contact p 53a de la photodiode D1 et au contact p 53a de la photodiode D2. Le contact 63 est également relié au contact n 55a de la photodiode D2 de sorte que les deux photodiodes D1 et D2 sont ainsi reliées électriquement en série par l'intermédiaire du contact 63 du plot de support 60.

L'invention n'est pas limitée aux deux réalisations qui viennent d'être décrites. On peut notamment proposer d'intégrer sur la structure un oscillateur local relié optiquement à l'un des guides du coupleur.

## Revendications

1. Procédé pour réaliser une structure intégrée monolithique comportant, sur un substrat (10) en matériau semi-isolant, deux composants opto-électroniques (K; D1, D2) reliés optiquement par un guide optique (1e; 2e) comprenant des couches superposées (20-24, 30) faites en un matériau électriquement conducteur ou semi-conducteur de conductivité de type donné, comprenant l'étape consistant à réaliser entre les deux composants opto-électroniques, et sur le chemin de la lumière transmise entre ces deux composants, au moins une barrière électriquement isolante (40), c'est-à-dire une barrière interdisant le passage d'un courant électrique entre les deux composants opto-électroniques, tout en étant apte à permettre une transmission de lumière entre ces derniers, **caractérisé en ce que** ladite barrière (40) est réalisée in situ, c'est à dire durant l'élaboration des composants de la structure ou après l'élaboration de ceux-ci, sans procéder à une gravure de matériau sur le trajet de la lumière dans la portion de structure entre ces deux composants, par dopage, localisé par un élément de conductivité d'un type opposé, d'au moins une région intermédiaire des couches superposées (20-24, 30) de conductivité du type donné permettant la transmission de lumière, selon une bande s'étendant transversalement au sens longitudinal du guide et en profondeur au travers de toutes les couches semiconductrices dudit guide optique pour former une double jonction équivalent à deux diodes tête-bêche s'opposant au passage de courant électrique au travers de la bande ainsi dopée.

2. Procédé selon la revendication 1, **caractérisé en ce que** l'un au moins des composants opto-électroniques (D1; D2) est disposé au-dessus du guide optique (1e; 2e), de façon à permettre une transmission de lumière de l'un à l'autre par evanescence.

3. Procédé selon la revendication 1, **caractérisé en ce que** l'un au moins des composants opto-électroniques est disposé à l'extrémité du guide optique, de façon à permettre une transmission de lumière de l'un à l'autre par couplage bout-à-bout.

4. Procédé selon l'une des revendications 1 à 3, **caractérisé en ce que** le dopage s'effectue par diffusion profonde, depuis la surface de la structure jusqu'au substrat isolant (10) de la structure, à travers le guide optique (1e; 2e), dudit élément de dopage.

5. Procédé selon l'une des revendications 1 à 3, **caractérisé en ce que** le dopage s'effectue par implantation ionique, depuis la surface de la structure jusqu'au substrat isolant de la structure, à travers le guide optique (1e; 2e), dudit élément de dopage.

6. Procédé selon l'une des revendications 4 et 5, la structure comportant au moins une première et une deuxième couches superposées de conductivité de types opposés, **caractérisé en ce que** l'on effectue un dopage d'une région de la première couche par un premier élément de dopage de conductivité de type opposé à celui de cette première couche et un dopage d'une région de la deuxième couche décalée de la région de la première couche, par un deuxième élément de dopage de conductivité de type opposé à celui de la deuxième couche et du premier élément de dopage, de manière à réaliser entre les deux composants opto-électroniques deux jonctions isolantes de type npn et pnp.

7. Procédé pour réaliser une structure intégrée monolithique comportant, sur un substrat (10) en matériau semi-isolant, deux composants opto-électroniques (K; D1, D2) reliés optiquement par un guide optique (1e; 2e) comprenant des couches superposées (20-24, 30) faites en un matériau électriquement conducteur ou semi-conducteur de conductivité de type donné, comprenant l'étape consistant à réaliser entre les deux composants opto-électroniques, et sur le chemin de la lumière transmise entre ces deux composants, au moins une barrière électriquement isolante, c'est-à-dire une barrière interdisant le passage d'un courant électrique entre les deux composants opto-électroniques, tout en étant apte à permettre une transmission de lumière entre ces derniers, **caractérisé en ce que** au moins l'un (D1; D2) des composants opto électroniques est disposé au-dessus d'une portion terminale du guide optique (1e; 2e) de façon à permettre une transmission de type evanescent de la lumière de l'un à l'autre, et **en ce que** ladite barrière est réalisée in situ, c'est à dire durant l'élaboration des composants de la structure ou après l'élaboration de ceux-ci, sans procéder à une gravure de matériau sur le trajet de la lumière dans la portion de structure entre ces deux composants, par dépôt par épitaxie, entre deux couches supérieures de la structure de conductivité du type donné et au niveau de la portion terminale du guide optique au dessus de laquelle le composant correspondant est disposé, d'une couche intermédiaire de conductivité de type opposé qui s'étend ainsi au travers de la portion de trajet de type évanescent de la lumière; pour la réalisation d'une double jonction équivalent à deux diodes tête-bêche s'opposant au passage du courant électrique au travers de cette couche intermédiaire.

8. Procédé selon l'une des revendications 1 à 6, **caractérisé en ce que** ledit élément de dopage est de conductivité de type p+.

9. Procédé selon la revendication 2 ou 7, **caractérisé en ce qu'**une couche d'adaptation d'impédance optique de conductivité de type n+ est déposée entre le guide optique et celui au moins des composants opto-électroniques pour lequel la transmission de lumière s'effectue par évanescence avec le guide optique.

10. Procédé selon l'une des revendications 1 à 9, **caractérisé en ce que** ladite structure intégrée monolithique est un circuit de réception hétérodyne comprenant deux photodiodes de détection (D1, D2) reliées électriquement en série et un coupleur 3dB (K) apte à être équilibré électriquement, le coupleur (K) constituant l'un desdits composants optoélectroniques et chaque photodiode (D1 ; D2) constituant l'autre desdits composants opto-électroniques.

11. Structure intégrée monolithique comportant, sur un substrat (10) en matériau semi-isolant, deux composants opto-électroniques (K; D1, D2) reliés optiquement par un guide optique (1e; 2e) comprenant des couches superposées (20-24, 30) faites en un matériau électriquement conducteur ou semiconducteur de conductivité d'un type donné, ladite structure comportant en outre, entre les deux composants optoélectroniques et sur le chemin de la lumière transmise entre ces deux composants, une barrière électriquement isolante (40), c'est-à-dire une barrière interdisant le passage d'un courant électrique entre les deux composants opto-électroniques, tout en étant apte à permettre la transmission de lumière entre ces derniers, **caractérisée en ce que** ladite barrière électriquement isolante (40) est formée in situ, c'est à dire durant l'élaboration des composants de la structure ou après l'élaboration de ceux-ci, sans procéder à une gravure de matériau sur le trajet de la lumière dans la portion de la structure entre ces deux composants, par dopage, par un élément de conductivité d'un type opposé, d'au moins une région intermédiaire des couches superposées (20-24, 30) de conductivité du type donné permettant la transmission de lumière, selon une bande s'étendant transversalement au sens longitudinal du guide et en profondeur au travers de toutes les couches semiconductrices dudit guide optique pour former une double jonction équivalent à deux diodes tête-bêche s'opposant au passage de courant électrique au travers de la bande ainsi dopée.

12. Structure intégrée monolithique comportant, sur un substrat (10) en matériau semi-isolant, deux composants opto-électroniques (K; D1, D2) reliés optiquement par un guide optique (1e; 2e) comprenant des couches superposées (20-24, 30) faites en un matériau électriquement conducteur ou semiconducteur de conductivité de type donné, ladite structure comportant en outre, entre les deux composants optoélectroniques et sur le chemin de la lumière transmise entre ces deux composants, une barrière électriquement isolante, c'est-à-dire une barrière interdisant le passage d'un courant électrique entre les deux composants optoélectroniques, tout en étant apte à permettre la transmission de lumière entre ces derniers, **caractérisée en ce que** au moins l'un (D1; D2) des composants optoélectroniques est disposé au-dessus d'une portion terminale du guide optique (1e; 2e) de façon à permettre une transmission de type evanescent de la lumière de l'un à l'autre, et **en ce que** ladite barrière électriquement isolante est formée in situ, c'est à dire durant l'élaboration des composants de la structure ou après l'élaboration de ceux-ci, sans procéder à une gravure de matériau sur le trajet de la lumière dans la portion de structure entre ces deux composants, par dépôt par épitaxie, entre deux couches supérieures de la structure de conductivité du type donné et au niveau de la portion terminale du guide optique au dessus de laquelle le composant correspondant est disposé, d'une couche intermédiaire de conductivité de type opposé qui s'étend ainsi au travers de la portion de trajet de type évanescent de la lumière; pour la réalisation d'une double jonction équivalent à deux diodes tête-bêche s'opposant au passage de courant électrique au travers de cette couche intermédiaire.

13. Application d'une structure conforme à l'une des revendications 11 ou 12, à la réalisation d'un circuit de réception hétérodyne intégré monolithique comportant deux photodiodes de détection (D1, D2) reliées électriquement en série, formant chacune un premier composant optoélectronique, et un coupleur 3dB électriquement ajustable (K), formant un second composant optoélectronique, une barrière électriquement isolante (40) conforme à l'une des revendications 11 ou 12 étant formée in situ entre chaque photodiode de détection et le coupleur, cette barrière étant apte à permettre la transmission de lumière entre le coupleur et chaque photodiode de détection.

## Claims

1. Process for making a monolithic integrated structure comprising, on a substrate (10) made of semi-insulating material, two opto-electronic components (K; D1, D2) optically linked by an optical guide (1e; 2e) comprising superposed layers (20-24, 30) made of an electrically conducting or semiconducting material of given conductivity type, comprising the step consisting in making between the two opto-electronic components, and in the path of the light transmitted between these two components, at least one electrically insulating barrier (40), that is to say a barrier preventing the passage of an electric current between the two opto-electronic components, whilst being able to allow transmission of light between them, **characterized in that** the said barrier (40) is made in situ, that is to say during the manufacture of the components of the structure or after their manufacture, without carrying out an etching of material on the track of the light through the portion of structure between these two components, by localized doping with an element of conductivity of an opposite type, of at least one intermediate region of the superposed layers (20-24, 30) of conductivity of the given type allowing the transmission of light, according to a band extending transversally to the longitudinal direction of the guide and depthwise through all the semiconducting layers of the said optical guide so as to form a double junction equivalent to two head-to-tail diodes opposing the passage of electric current through the band thus doped.

2. Process according to Claim 1, **characterized in that** one at least of the opto-electronic components (D1; D2) is placed above the optical guide (1e; 2e), in such a way as to allow transmission of light from one to the other by evanescence.

3. Process according to Claim 1, **characterized in that** one at least of the opto-electronic components is placed at the end of the optical guide, in such a way as to allow transmission of light from one to the other by end-to-end coupling.

4. Process according to one of Claims 1 to 3, **characterized in that** the doping is performed by deep diffusion, from the surface of the structure down to the insulating substrate (10) of the structure, through the optical guide (1e; 2e), of the said doping element.

5. Process according to one of Claims 1 to 3, **characterized in that** the doping is performed by ion implantation, from the surface of the structure down to the insulating substrate of the structure, through the optical guide (1e; 2e), of the said doping element.

6. Process according to one of Claims 4 and 5, the structure including at least one first and one second superposed layer of opposite conductivity types, **characterized in that** a doping of a region of the first layer is performed with a first doping element of opposite conductivity type to that of this first layer and a doping of a region of the second layer, offset from the region of the first layer, with a second doping element of opposite conductivity type to that of the second layer and of the first doping element, so as to make, between the two opto-electronic components, two insulating junctions of npn and pnp type.

7. Process for making a monolithic integrated structure comprising, on a substrate (10) made of semi-insulating material, two opto-electronic components (K; D1, D2) optically linked by an optical guide (1e; 2e) comprising superimposed layers (20-24, 30) made of an electrically conducting or semiconducting material of given conductivity type, comprising the step consisting in making between the two opto-electronic components, and in the path of the light transmitted between these two components, at least one electrically insulating barrier, that is to say a barrier preventing the passage of an electric current between the two opto-electronic components, whilst being able to allow transmission of light between them, **characterized in that** at least one (D1; D2) of the opto-electronic components is placed above a terminal portion of the optical guide (1e; 2e) in such a way as to allow evanescent type transmission of light from one to the other, and **in that** the said barrier is made in situ, that is to say during the manufacture of the components of the structure or after their manufacture, without carrying out an etching of material on the track of the light in the portion of structure between these two components, by epitaxial deposition between two upper layers of the structure of conductivity of the given type and at the level of the terminal portion of the optical guide above which the corresponding component is placed, of an intermediate layer of conductivity of opposite type which thus extends through the portion of the evanescent type track of the light; for the making of a double junction equivalent to two head-to-tail diodes opposing the passage of the electric current through this intermediate layer.

8. Process according to one of Claims 1 to 6, **characterized in that** the said doping element is of p+ type conductivity.

9. Process according to Claim 2 or 7, **characterized in that** an optical impedance matching layer of n+ type conductivity is deposited between the optical guide and that one at least of the opto-electronic components for which the transmission of light is effected by evanescence with the optical guide.

10. Process according to one of Claims 1 to 9, **characterized in that** the said monolithic integrated structure is a heterodyne reception circuit comprising two detection photodiodes (D1, D2) connected electrically in series and a 3dB-coupler (K) able to be electrically balanced, the coupler (K) constituting one of the said opto-electronic components and each photodiode (D1; D2) constituting the other of the said opto-electronic components.

11. Monolithic integrated structure comprising, on a substrate (10) made of semi-insulating material, two opto-electronic components (K; D1, D2) optically linked by an optical guide (1e; 2e) comprising superposed layers (20-24, 30) made of an electrically conducting or semiconducting material of conductivity of a given type, the said structure furthermore comprising, between the two opto-electronic components, and in the path of the light transmitted between these two components, an electrically insulating barrier (40), that is to say a barrier preventing the passage of an electric current between the two opto-electronic components, whilst being able to allow the transmission of light between them, **characterized in that** the said electrically insulating barrier (40) is formed in situ, that is to say during the manufacture of the components of the structure or after their manufacture, without carrying out etching of material on the track of the light in the portion of the structure between these two components, by doping the superposed layers (20-24, 30) with an element of conductivity of an opposite type, of at least one intermediate region of conductivity of the given type allowing the transmission of light, according to a band extending transversely to the longitudinal direction of the guide and depthwise through all the semiconducting layers of the said optical guide so as to form a double junction equivalent to two head-to-tail diodes opposing the passage of electric current through the band thus doped.

12. Monolithic integrated structure comprising, on a substrate (10) made of semi-insulating material, two opto-electronic components (K; D1, D2) optically linked by an optical guide (1e; 2e) comprising superposed layers (20-24, 30) made of an electrically conducting or semiconducting material of conductivity of a given type, the said structure furthermore comprising, between the two opto-electronic components, and in the path of the light transmitted between these two components, an electrically insulating barrier, that is to say a barrier preventing the passage of an electric current between the two opto-electronic components, whilst being able to allow the transmission of light between them, **characterized in that** at least one (D1; D2) of the opto-electronic components is placed above a terminal portion of the optical guide (1e; 2e) in such a way as to allow evanescent type transmission of light from one to the other, and **in that** the said electrically insulating barrier is made in situ, that is to say during the manufacture of the components of the structure or after their manufacture, without carrying out. etching of material on the track of the light in the portion of structure between these two components, by epitaxial deposition between two upper layers of the of the structure of conductivity of the given type and at the level of the terminal portion of the optical guide above which the corresponding component is placed, of an intermediate layer of conductivity of opposite type which thus extends through the portion of the evanescent type track of the light; for the making of a double junction equivalent to two head-to-tail diodes opposing the passage of the electric current through this intermediate layer.

13. Application of a structure in accordance with either of Claims 11 and 12, to the making of a monolithic integrated heterodyne receiving circuit comprising two detection photodiodes (D1, D2) electrically linked in series, each forming a first opto-electronic component, and an electrically adjustable 3dB coupler (K), forming a second opto-electronic component, an electrically insulating barrier (40) in accordance with either of Claims 11 and 12 being formed in situ between each detection photodiode and the coupler, this barrier being able to allow the transmission of light between the coupler and each detection photodiode.

## Patentansprüche

1. Verfahren zur Herstellung eines integrierten monolithischen Aufbaus, welcher auf einem Substrat (10) aus semiisolierendem Material zwei optoelektronische Komponenten (K; D1, D2) aufweist, die optisch durch einen optischen Leiter (1e; 2e) verbunden sind, welcher übereinanderliegende Schichten (20-24, 30) aus einem elektrisch leitenden oder halbleitenden Material mit einem gegebenen Leitungstyp aufweist, wobei das Verfahren den Schritt bestehend aus einer Herstellung, zwischen den beiden optoelektronischen Komponenten und auf dem Weg des zwischen diesen beiden Komponenten übertragenen Lichts, wenigstens einer elektrisch isolierenden Barriere (40), das heißt einer Barriere, die den Durchgang eines elektrischen Stromes zwischen den beiden optoelektronischen Komponenten sperrt und dabei geeignet ist, eine Übertragung von Licht zwischen letzteren zuzulassen, aufweist, **dadurch gekennzeichnet, daß** die Barriere (40) in situ, das heißt während der Ausarbeitung der Komponenten des Aufbaus oder nach Ausarbeitung derselben, ohne eine Ätzung des Materials an der Bahn des Lichts im Aufbauteil zwischen diesen beiden Komponenten vorzunehmen, durch lokale Dotierung, mit einem Element entgegengesetzten Leitungstyps, wenigstens eines den Durchgang von Licht gestattenden Bereichs zwischen den übereinanderliegenden Schichten (20-24, 30) gegebenen Leitungstyps gemäß einem Band, welches sich quer zur Längsrichtung des Bandes und in der Tiefe durch alle halbleitenden Schichten des optischen Leiters erstreckt, hergestellt wird, um so einen Doppelübergang herzustellen, der zwei umgekehrten Dioden entspricht, die dem Durchgang von elektrischem Strom durch das so dotierte Band entgegenwirken.

2. Verfahren nach Anspruch 1, **dadurch gekennzeichnet, daß** wenigstens die eine der optoelektronischen Komponenten (D1; D2) über dem optischen Leiter (1e; 2e) angeordnet ist, derart, daß ein Durchgang von Licht von einer zur anderen durch räumliches Abklingen möglich ist.

3. Verfahren nach Anspruch 1, **dadurch gekennzeichnet, daß** wenigstens die eine der optoelektronischen Komponenten am Ende des optischen Leiters angeordnet ist, derart, daß ein Durchgang von Licht von einer zur anderen durch End-zu-End-Kopplung möglich ist.

4. Verfahren nach einem der Ansprüche 1 bis 3, **dadurch gekennzeichnet, daß** die Dotierung durch Tiefendiffusion des Dotierungselements von der Oberfläche des Aufbaus bis zum isolierenden Substrat (10) des Aufbaus durch den optischen Leiter (1e; 2e) hindurch erfolgt.

5. Verfahren nach einem der Ansprüche 1 bis 3, **dadurch gekennzeichnet, daß** die Dotierung durch Innenimplantation des Dotierungselements von der Oberfläche des Aufbaus bis zum isolierenden Substrat des Aufbaus durch den optischen Leiter (1e; 2e) hindurch erfolgt.

6. Verfahren nach einem der Ansprüche 4 und 5, wobei der Aufbau übereinander liegend wenigstens eine erste und eine zweite Schicht entgegengesetzten Leitungstyps aufweist, **dadurch gekennzeichnet, daß** eine Dotierung eines Bereichs der ersten Schicht mit einem ersten Dotierungselement entgesetzten Leitungstyps zu demjenigen der ersten Schicht und eine Dotierung eines Bereichs der zweiten Schicht, der gegenüber dem Bereich der ersten Schicht versetzt ist, mit einem zweiten Dotierungselement entgegengesetzten Leitungstyps zu dem demjenigen der zweiten Schicht und des ersten Dotierungselements erfolgen, derart, daß zwischen den beiden optoelektronischen Komponenten zwei isolierende Übergänge des Typs npn und pnp erzeugt werden.

7. Verfahren zur Herstellung eines integrierten momolithischen Aufbaus, der auf einem Substrat (10) aus semiisolierendem Material zwei optoelektronische Komponenten (K; D1, D2) aufweist, die optisch mit einem optischen Leiter (1e; 2e) verbunden sind, welcher übereinanderliegende Schichten (20-24, 30) aus einem elektrisch leitenden oder halbleitenden Material mit einem gegebenen Leitungstyp aufweist, wobei das Verfahren den Schritt bestehend aus einer Herstellung, zwischen den beiden optoelektronischen Komponenten und auf dem Weg des zwischen diesen beiden Komponenten übertragenen Lichts, wenigstens eine elektrisch isolierende Barriere (40), das heißt einer Barriere, die den Durchgang eines elektrischen Stromes zwischen den beiden optoelektronischen Komponenten sperrt und dabei geeignet ist, eine Übertragung von Licht zwischen letzteren zuzulassen, aufweist, **dadurch gekennzeichnet, daß** wenigstens die eine (D1; D2) der optoelektronischen Komponenten über einem Endabschnitt des optischen Leiters (1e; 2e) angeordnet ist, derart, daß ein Durchgang vom räumlichen Abklingtyp des Lichts von einer zur anderen zugelassen ist, und daß die Barriere in situ, das heißt während der Ausarbeitung der Komponenten des Aufbaus oder nach der Ausarbeitung derselben, ohne eine Ätzung des Materials an der Bahn des Lichts im Aufbauteil zwischen diesen beiden Komponenten vorzunehmen, durch epitaxtiale Ablagerung, zwischen zwei oberen Schichten des Aufbaus mit dem gegebenen Leitungstyp und auf Höhe des Endabschnitts des optischen Leiters, über welchem die entsprechende Komponente angeordnet ist, einer Zwischenschicht mit entgegengesetztem Leitungstyp, die sich so durch den Lichtbahnabschnitt vom räumlich abklingenden Typ erstreckt, hergestellt wird, um so einen Doppelübergang herzustellen, der zwei umgekehrten Dioden äquivalent ist, die dem Durchgang des elektrischen Stroms durch diese Zwischenschicht entgegenwirken.

8. Verfahren nach einem der Ansprüche 1 bis 6, **dadurch gekennzeichnet, daß** das Dotierungselement vom Leitungstyp p+ ist.

9. Verfahren nach Anspruch 2 oder 7, **dadurch gekennzeichnet, daß** eine Schicht zur optischen Impedanzanspassung mit Leitungstyp n+ zwischen dem optischen Leiter und wenigstens derjenigen der optoelektronischen Komponenten abgelagert ist, für welche der Lichtdurchgang durch räumliches Abklingen mit dem optischen Leiter erfolgt.

10. Verfahren nach einem der Ansprüche 1 bis 9, **dadurch gekennzeichnet, daß** der integrierte monolithische Aufbau ein heterodyner Empfangskreis ist, welcher zwei Detektorphotodioden (D1, D2), die elektrisch in Reihe geschaltet sind, und einen elektrisch abgleichbaren 3dB-Koppler (K) aufweist, wobei der Koppler (K) einen der optoelektronischen Komponenten und jede Diode (D1; D2) die andere der optoelektronischen Komponenten bildet.

11. Integrierter momolithischer Aufbau, welcher auf einem Substrat (10) aus einem halbisolierenden Material zwei optoelektronische Komponenten (K; D1, D2) aufweist, die optisch durch einen optischen Leiter (1e; 2e) verbunden sind, der übereinanderliegende Schichten (20-24, 30) aus einem elektrisch leitenden oder halbleitenden Material mit einem gegebenen Leitungstyp aufweist, wobei der Aufbau ferner zwischen den beiden optoelektronischen Komponenten und auf dem Weg des zwischen diesen beiden Komponenten übertragenen Lichts eine elektrisch isolierende Barriere (40), das heißt eine Barriere, die den Durchgang eines elektrischen Stroms zwischen den beiden optoelektronischen Komponenten sperrt und dabei geeignet ist, eine Übertragung von Licht zwischen letzteren zuzulassen, aufweist, **dadurch gekennzeichnet, daß** die elektrisch isolierende Barriere (40) in situ, das heißt während der Ausarbeitung der Komponenten des Aufbaus oder nach Ausarbeitung derselben, ohne Vornahme einer Materialätzung auf dem Lichtweg im Aufbauteil zwischen diesen beiden Komponenten, durch Dotierung, mit einem Element entgegengesetzten Leitungstyps, wenigstens eines Zwischenbereichs der übereinanderliegenden Schichten (20-24, 30) des gegebenen Leitungstyps, der den Lichtdurchgang gemäß einem Band gestattet, das sich quer zur Längsrichtung des optischen Leiters und in der Tiefe durch alle halbleitenden Schichten des optischen Leiters erstreckt, ausgebildet wird, um so einen Doppelübergang auszubilden, der zwei umgekehrten Dioden äquivalent ist, die dem Durchgang von elektrischem Strom durch das so dotierte Band entgegenwirken.

12. Integrierter momolithischer Aufbau, welcher auf einem Substrat (10) aus einem halbisolierenden Material zwei optoelektronische Komponenten (K; D1, D2) aufweist, die optisch durch einen optischen Leiter (1e; 2e) verbunden sind, der übereinanderliegende Schichten (20-24, 30) aus einem elektrisch leitenden oder halbleitenden Material mit einem gegebenen Leitungstyp aufweist, wobei der Aufbau ferner zwischen den beiden optoelektronischen Komponenten und auf dem Weg des zwischen diesen beiden Komponenten übertragenen Lichts eine elektrisch isolierende Barriere, das heißt eine Barriere, die den Durchgang eines elektrischen Stroms zwischen den beiden optoelektronischen Komponenten sperrt und dabei geeignet ist, eine Übertragung von Licht zwischen letzteren zuzulassen, aufweist, **dadurch gekennzeichnet, daß** wenigstens die eine (D1; D2) der optoelektronischen Komponenten über einem Endabschnitt des optischen Leiters (1e; 2e) angeordnet ist, derart, daß ein Durchgang vom räumlichen Abklingtyp des Lichts von einem zum anderen zugelassen ist, und daß die elektrisch isolierende Barriere in situ, das heißt während der Ausarbeitung der Komponenten des Aufbaus oder nach der Ausarbeitung derselben, ohne Vornahme einer Materialätzung auf dem Lichtweg im Aufbauteil zwischen diesen beiden Komponenten, durch epitaxiale Ablagerung, zwischen zwei oberen Schichten des Aufbaus mit dem gegebenen Leitungstyp und auf Höhe des Endabschnitts des optischen Leiters, über welchem die entsprechende Komponente angeordnet ist, einer Zwischenschicht mit entgegengesetztem Leitungstyp, die sich so durch den Lichtwegschnitt vom räumlichen Abklingtyp erstreckt, ausgebildet ist, um so einen Doppelübergang herzustellen, der zwei entgegengesetzten Dioden äquivalent ist, die dem Durchgang von elektrischem Strom durch diese Zwischenschicht entgegenwirken.

13. Verwendung eines Aufbaus nach einem der Ansprüche 11 oder 12 zur Herstellung eines monolithischen integrierten heterodynen Empfangskreises, der zwei elektrisch in Reihe geschaltete Detektorphotodioden (D1, D2), die jeweils eine erste optoelektronische Komponente bilden, und einen elektrisch einstellbaren 3dB-Koppler (K), der eine zweite optoelektronische Komponente bildet, aufweist, wobei eine elektrisch isolierende Barriere nach einem der Ansprüche 11 oder 12 in situ zwischen jeder Detektorphotodiode und dem Koppler ausgebildet ist, wobei diese Barriere so eingerichtet ist, daß der Durchgang von Licht zwischen dem Koppler und jeder Detektorphotodiode zugelassen ist.
